# EUROPÄISCHE PATENTSCHRIFT

(11) **EP 1 606 557 B1**
(45) Veröffentlichungstag und Bekanntmachung des Hinweises auf die Patenterteilung: **18.08.2010**
(21) Anmeldenummer: 04722542.0
(22) Anmeldetag: 23.03.2004
(51) Int. Cl.: F24D 3/16

(54) **STRAHLFLÄCHENAUFBAU**
RADIATING SURFACE STRUCTURE
STRUCTURE DE SURFACE RAYONNANTE

(30) Priorität: 24.03.2003 DE 20304740 U
(43) Veröffentlichungstag der Anmeldung: 21.12.2005
(73) Patentinhaber: Frenger Systemen BV Heiz- und Kühltechnik GmbH, 64823 Gross-Umstadt (DE)
(72) Erfinder: MENGE, Klaus, 64823 Gross-Umstadt (DE); MENGE, Hans, Werner, 64823 Gross-Umstadt (DE)
(74) Vertreter: KEIL & SCHAAFHAUSEN Patentanwälte
(86) Internationale Anmeldenummer: PCT/EP2004/003042
(87) Internationale Veröffentlichungsnummer: WO 2004/085926

(56) Entgegenhaltungen:
- BE-A- 896 664
- CH-A- 287 801
- DE-A- 1 609 346

## Beschreibung

Die Erfindung betrifft einen Strahlflächenaufbau, insbesondere einen Deckenstrahlflächenaufbau, mit einer oder mehreren Strahlplatten aus Blech, die mit einem aufgekanteten Rand an zumindest einem von im Abstand voneinander angeordneten Rohren eines mit einem Heiz- oder Kühlmedium zu beaufschlagenden Rohrregisters zur Wärme- und/oder Kälteübertragung anliegen.

Aus der DE 25 20 467 A1 ist eine Vorrichtung zum Heizen eines Raumes bekannt, welche mehrere Heizwasser führende rechteckige Rohre aufweist, auf welchen Wärmeabstrahlbleche mit nach oben abgewinkelten Abschnitten aufgelegt sind. Durch das Auflegen bzw. das Einschieben dieser Wärmeabstrahlbleche zwischen die rechteckigen Rohre wird zwar die Montage erleichtert, allerdings ist der Wärmeübergang zwischen den Wärmeabstrahlblechen und den Rohren nur unzureichend, da diese lediglich mit ihren abgewinkelten Abschnitten lose an den Rohren anliegen.

Es ist daher bspw. aus der DE 200 02 868 U1 bekannt, an Rohren eines Rohrregisters für einen Strahlflächenaufbau der eingangs genannten Art einen Gewindebolzen anzubringen, über den zumindest ein Befestigungselement, bspw. eine U-förmige Schiene, zur Festlegung der Strahlplatten an dem jeweiligen Rohr anpressbar ist. In der DE 198 30 245 A1 wird vorgeschlagen, Strahlplatten im Bereich ihrer Randaufkantungen mittels Klemmfedern aus einem elastischen Flachmaterial auf den Heizrohren zu befestigen. Bei diesen bekannten Lösungen eines Strahlflächenaufbaus wird daher insbesondere im Bereich der Befestigungselemente bzw. der Klemmfedem ein besonders guter Wärmeübergang zwischen den Strahlplatten und den Rohren ermöglicht. Allerdings wird der Montageaufwand für die Befestigung der Strahlplatten an den Rohren in einigen Fällen als verbesserungswürdig empfunden.

Weiter ist es bekannt, Strahlplatten eines Strahlflächenaufbaus durch Punktverschweißungen an den Rohren zu fixieren. Auch in diesem Fall wird nur bereichsweise ein guter Wärmeübergang zwischen den Strahlplatten und den Rohren ermöglicht. Die Strahlplatten lassen sich auch nicht mehr zerstörungsfrei von den Rohren trennen. Darüber hinaus ist auch dieses Befestigungsverfahren, bei dem bspw. etwa 30 Schweißpunkte pro laufendem Meter aufgebracht werden müssen, sehr arbeitsintensiv.

Aus dem Dokument BE 896 664 A ist eine Strahlplattenanordung bekannt, bei der Strahlplatten mittes der Spannung abgekanteter Ränder zwischen zwei benachbarten Rohren eingespannt werden. Der abgekantete, das Rohr klammemde Bereich ist dabei V-förmig ausgestaltet.

Ein ähnliches Wärmetauschplattensystem ist außerdem aus dem Dokument DE 1 609 356 A bekannt. Dort werden jedoch keine kreisrunden Rohre, sondern quadratische oder sechseckige Rohre verwendet, um einen im Wesentlichen ebenen und guten Kontakt zu Befestigungsteilen zu erzielen.

In dem Dokument CH 287 801 A wird vorgeschlagen, für einen verbesserten Wärmekontakt sowie für eine zuverlässige Halterung zusätzlich zu im Wesentlichen rechtwinklig abgekanteten Rändern mit einem der Krümmung eines Rohr angepassten Abschnitt zum Einspannen der dort gezeigten Strahlplatten separate Halteklammern vorzusehen.

Demgegenüber ist es Aufgabe der vorliegenden Erfindung, einen Strahlflächenaufbau der eingangs genannten Art bereitzustellen, welcher einen guten Wärmeübergang zwischen den Strahlplatten und den Rohren sowie eine gute Spannwirkung ermöglicht und gleichzeitig in kurzer Zeit mit einfachen Mitteln montierbar ist.

Diese Aufgabe wird erfindungsgemäß im Wesentlichen mit den Merkmalen des Anspruches 1 gelöst. Die wenigstens eine Strahlplatte besteht hierzu aus einem elastisch verformbaren Blech, welches z. B. von unten gesehen konkav und/oder konvex und/oder abgewinkelt ist. Dabei weist die wenigstens eine Strahlplatte zumindest zwei in einem stumpfen Winkel miteinander verbundene Strahlplattenbereiche mit einer derartigen Elastizität auf, dass diese zwischen den Rohren selbsttragend festspannbar ist. Zum Einbringen einer Strahlplatte zwischen zwei Rohre ist es daher lediglich erforderlich, die bspw. in einem stumpfen Winkel abgewinkelten Strahlplattenbereiche elastisch zu verformen und zwischen den Rohren zu positionieren, so dass die Strahlplatte dann mit ihrem aufgekanteten Rand durch die Rückstellkräfte der Strahlplattenbereiche zwischen den Rohren einschnappen kann. Die Strahlplatte wird dabei allein durch die elastischen Rücksfiellkräfte unter Vorspannung zwischen den Rohren gehalten, ohne dass zusätzliche Befestigungsmittel, wie Federn, U-Profile, Schweißpunkte, Magnete oder dgl., benötigt werden. Die Montage eines erfindungsgemäßen Strahlflächenaufbaus wird dadurch besonders schnell und einfach möglich. Gleichzeitig wird über die gesamte Länge der Rohre ein sehr inniger, großflächiger Kontakt zu den Strahlplatten erzeugt, so dass ein sehr guter Wärmeübergang und damit eine hohe Leistung des Strahlflächenaufbaus erzielt wird.

Zumindest einige der Strahlplatten weisen einen zentralen Strahlplattenbereich, der sich im eingebauten Zustand des Strahlflächenaufbaus im Wesentlichen horizontal erstreckt, und zwei auf einander gegenüberliegenden Seiten mit dem zentralen Strahlplattenbereich verbundene seitliche Strahlplattenbereiche auf, die wiederum jeweils auf ihrer dem zentralen Strahlplattenbereich abgewandten Seite mit dem aufgekanteten Rand verbunden sind. Die Strahlplatten sind damit näherungsweise U-förmig gestaltet und die Schenkel des U, die durch die aufgekanteten Ränder gebildet werden, lassen sich durch eine elastische Verformung des zentralen Strahlplattenbereichs und der seitlichen Strahlplattenbereiche aneinander annähern, um die Strahlplatte zwischen zwei Rohren zu montieren.

Vorzugsweise sind die Strahlplattenbereiche einstückig miteinander und mit dem aufgekanteten Rand verbunden. Die Strahlplatten lassen sich auf diese Weise kostengünstig und einfach aus einem Blechstreifen herstellen.

Wenn der stumpfe Winkel, mit dem die Strahlplattenbereiche miteinander verbunden sind, zwischen 110° und 180°, vorzugsweise zwischen 135° und 175°, beträgt, lassen sich die Strahlplatten besonders gut unter Vorspannung zwischen zwei Rohren festklemmen. Ein besonders bevorzugter Bereich des stumpfen Winkels, mit dem die Strahlplattenbereiche miteinander verbunden sind, liegt bei etwa 155°.

Die Strahlplatten sind von der Unterseite und/oder von der Oberseite des Rohrregisters her unter Freihaltung eines unterseitigen Abstrahlbereichs der jeweiligen Rohre an dieser festklemmbar. Dabei nimmt der freigehaltene unterseitige Abstrahlbereich bspw. einen Umfangsbereich der Rohre zwischen 30° und 160° ein und ermöglicht eine direkte Wärmestrahlung von dem Rohr in den zu temperierenden Raum.

Wenn der aufgekantete Rand an dem jeweiligen Rohr in einem Umfangsbereich von wenigstens 30° anliegt, wird einerseits ein besonders guter Wärmeübergang zwischen der Strahlplatte und dem Rohr erzielt. Gleichzeitig wird hierdurch auch erreicht, dass die Strahlplatte besonders sicher durch die Vorspannung zwischen den Rohren gehalten ist.

Der Strahlflächenaufbau besteht vorzugsweise aus einer oder mehreren als Mittelplatten ausgebildeten Strahlplatten, sowie in jeder Plattenreihe aus zwei als Seitenplatten ausgebildeten Strahlplatten. Die Seitenplatten liegen dabei lediglich mit ihrem inneren Rand an einem Rohr an, während sie sich auf der dem Rohr abgewandten Seite auf einem Querträger zur Aufhängung abstützen. Die Mittelplatten weisen hierzu jeweils zwei aufgekantete Ränder auf und die Seitenplatten sind nur mit einem aufgekanteten Rand versehen.

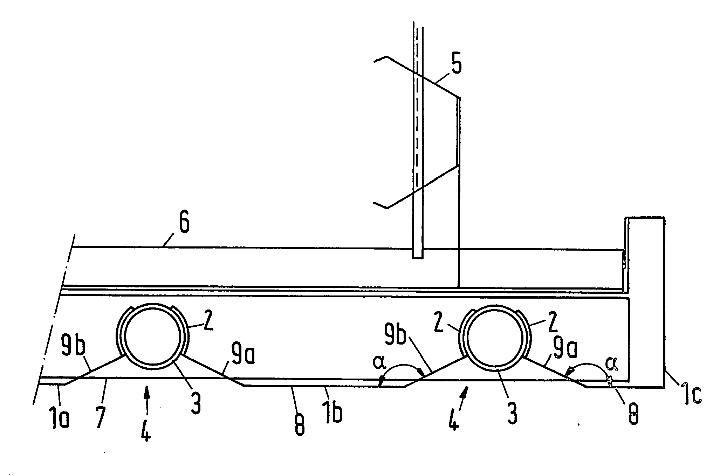

Im Folgenden wird die Erfindung anhand einer Ausführungsform und unter Bezugnahme auf die beigefügte Zeichnung näher erläutert. Die einzige Figur zeigt eine schematische Querschnittsansicht eines erfindungsgemäßen Strahlflächenaufbaus.

Der in der Figur dargestellte Strahlflächenaufbau weist zwei als Mittelplatten ausgebildete Strahlplatten 1a und 1b sowie eine in der Figur rechte als Seitenplatte ausgebildete Strahlplatte 1c auf. Die als Mittelplatte ausgebildete Strahlplatte 1 b ist mit zwei aufgekanteten Rändern 2 versehen, die vollflächig an jeweils einem Rohr 3 anliegen. Die Ränder 2 sind dabei mit einer Wölbung versehen, die an die Außenkontur der Rohre 3 angepasst ist. Durch die Strahlplatten wird ein Rohrsegment der Rohre 3 nicht abgedeckt, so dass ein freigehaltener Abstrahlbereich 4 an der in der Figur unteren Seite des Strahlflächenaufbaus gebildet ist, der in direktem Kontakt mit der Umgebung steht. Der freigehaltene unterseitige Abstrahlbereich 4 nimmt dabei einen Umfangsbereich der Rohre 3 von etwa 110° ein. Der aufgekantete Rand 2 der Strahlplatten liegt an dem jeweiligen Rohr 3 mit einem Umfangsbereich von etwa 60° an.

Der Strahlflächenaufbau ist über eine Aufhängung 5 mit einem Querträger 6 an einer nicht dargestellten Decke befestigt. Der Querträger 6 hält dabei in nicht näher dargestellter Weise sowohl die Rohre 3, die ein Rohrregister bilden, als auch Verteiler- oder Sammelrohre 7.

Die als Mittelplatte ausgebildete Strahlplatte 1 b ist in einen in der Figur horizontalen, zentralen Strahlplattenbereich 8 und zwei mit diesem verbundene seitliche Strahlplattenbereiche 9a und 9b unterteilt. Die seitlichen Strahlplattenbereiche 9a und 9b verlaufen dabei in einem stumpfen Winkel α von etwa 155° zu dem zentralen Strahlplattenbereich 8. Auf ihrer dem zentralen Strahlplattenbereich 8 abgewandten Seite sind die seitlichen Strahlplattenbereiche 9a und 9b jeweils mit den aufgekanteten Rändern 2 verbunden. Die gesamte Strahlplatte 1 b ist dabei einstückig bspw. durch Abkanten eines Blechstreifens hergestellt.

Die als Seitenplatte ausgebildete Strahlplatte 1 c weist demgegenüber nur einen kleineren zentralen Strahlplattenbereich 8 und einen einzigen mit diesem verbundenen Seitenplattenbereich 9a auf, der in den aufgekanteten Rand 2 mündet. Auf ihrer dem aufgekanteten Rand 2 abgewandten Seite ist der zentrale Strahlplattenbereich 8 der Strahlplatte 1c mit einer sich auf dem Querträger 6 abstützenden Wand versehen.

Zur Montage der Strahlplatten 1 a, 1 b zwischen zwei Rohren 3 werden die aufgekanteten Ränder 2 elastisch so weit aufeinander zu verschwenkt, dass die Strahlplatte zwischen die Rohre 3 einführbar ist. Durch die Rückstellkräfte der Strahlplattenbereiche schnappen die Ränder 2 die Rohre 3 umgreifend zwischen diesen ein, wenn die Strahlplatte freigegeben wird. Auf diese Weise ist die Strahlplatte allein durch ihre elastische Vorspannung zwischen den Rohren 3 festgeklemmt, ohne dass weitere Befestigungsmittel zum Anbringen der Strahlplatten 1 a, 1b an den Rohren 3 notwendig sind. Durch diese elastische Vorspannung werden die Strahlplatten 1a, 1b über ihre gesamte Länge mit den aufgekanteten Rändern 2 an die Rohre 3 festgepresst. Hierdurch entsteht auf einer großen Fläche ein inniger Kontakt, so dass ein guter Wärmeübergang zwischen den Rohren 3 und den Strahlplatten 1a, 1 b erfolgt.

### Bezugszeichenliste

- 1a, 1b: Strahlplatte (Mittelplatte)
- 1c: Strahlplatte (Seitenplatte)
- 2: aufgekanteter Rand
- 3: Rohr
- 4: Abstrahlbereich
- 5: Aufhängung
- 6: Querträger
- 7: Verteiler- oder Sammelrohr
- 8: zentraler Strahlplattenbereich
- 9a, 9b: seitlicher Strahlplattenbereich

- α: stumpfer Winkel

## Patentansprüche

1. Strahlflächenaufbau, insbesondere Deckenstrahlflächenaufbau, mit wenigstens einer Strahlplatte (1a, 1b, 1c) aus Blech, die mit einem aufgekanteten Rand (2) an zumindest einem von im Abstand voneinander angeordneten Rohren (3) eines mit einem Heiz- oder Kühlmedium zu beaufschlagenden Rohrregisters zur Wärme- und/oder Kälteübertragung anliegt, wobei die Strahlplatte (1a, 1b, 1c) unter Vorspannung ohne weitere Befestigungsmittel, d. h. selbstspannend, zwischen zwei Rohren (3) festklemmbar ist, wobei die Rohre (3) einen kreisförmigen Querschnitt aufweisen so dass die Strahlplatten (1a, 1b, 1c) unter Freihaltung eines unterseitigen Abstrahlbereiches (4) der jeweiligen Rohre (3) an diese festklemmbar sind, **dadurch gekennzeichet, dass** zumindest eine als Mittelplatte ausgebildete Strahlplatte (1a, 1b) einen zentralen Strahlplattenbereich (8), der sich im eingebauten Zustand im Wesentlichen horizontal erstreckt, und zwei auf einander gegenüberliegenden Seiten mit diesem unter einem stumpfen Winkel (α) verbundene seitliche Strahlplattenbereiche (9a, 9b) aufweist, die ihrerseits jeweils auf ihrer dem zentralen Strahlplattenbereich (8) abgewandten Seite mit dem an jeweils einem Rohr (3) anliegen aufgekanteten Rand (2) verbunden sind, und dass als Seitenplatten ausgebildete Strahlplatten (1c) vorgesehen sind, die einerseits mit einem Rand (2) an einem Rohr (3) anliegen und andererseits auf einem Querträger (7) einer Aufhängung (5) abgestützt sind und der aufgekantete Rand (2) der Strahlplatten (1a, 1b 1c) mit einer an die Außenkontur der Rohre (3) angepassten Wölbung versehen ist.

2. Strahlflächenaufbau nach Anspruch 1, **dadurch gekennzeichnet, dass** die wenigstens eine Strahlplatte (1a, 1b, 1c) aus elastisch verformbarem Blech von unten gesehen konkav und/oder konvex ist.

3. Strahlflächenaufbau nach Anspruch 1 oder 2, **dadurch gekennzeichnet, dass** die Strahlplattenbereiche (8, 9a, 9b) einstückig miteinander und mit dem aufgekanteten Rand (2) verbunden sind.

4. Strahlflächenaufbau nach einem der vorhergehenden Ansprüche, **dadurch gekennzeichnet, dass** der stumpfe Winkel (α) zwischen 110° und 180°, vorzugsweise zwischen 135° und 175°, insbesondere etwa 155°, beträgt.

5. Strahlflächenaufbau nach einem der vorhergehenden Ansprüche, **dadurch gekennzeichnet, dass** die Strahlplatten (1a, 1b, 1c) von der Unterseite und/oder von der Oberseite des Rohrregisters festklemmbar sind.

6. Strahlflächenaufbau nach einem der vorhergehenden Ansprüche, **dadurch gekennzeichnet, dass** der freigehaltene unterseitige Abstrahlbereich (4) einen Umfangsbereich der Rohre (3) zwischen 30° und 160° einnimmt.

7. Strahlflächenaufbau nach einem der vorhergehenden Ansprüche, **dadurch gekennzeichnet, dass** der aufgekantete Rand (2) an dem jeweiligen Rohr (3) in einem Umfangsbereich von wenigstens 30° anliegt.

## Claims

1. A radiant surface structure, particularly a radiant ceiling surface structure, with at least one radiant plate (1a, 1b, 1c) of sheet metal, a raised edge (2) of which abuts at least one of several spaced-apart tubes (3) of a tube register to be acted upon with a heating or cooling medium in order to realize a hot and/or cold thermal transfer, wherein the radiant plate (1a, 1b, 1c) can be clamped in position between two tubes (3) under prestress without additional fastening means, i.e., in a self-clamping fashion, and wherein the tubes (3) have a circular cross section such that the radiant plates (1a, 1b, 1c) can be clamped on the tubes (3) in such a way that a bottom radiating region (4) of the respective tubes remains clear, **characterized in that** at least one radiant plate (1a, 1b) that is realized in the form of a center plate features a central radiant plate region (8) that essentially extends horizontally in the installed state and two lateral radiant plate regions (9a, 9b) that are connected to opposite sides of the central radiant plate region at an obtuse angle (α) and to the raised edge (2) that respectively abuts a tube (3) on the opposite side referred to the central radiant plate region (8), **in that** radiant plates (1c) in the form of lateral plates are provided, wherein these lateral plates abut a tube (3) with an edge (2) on one side and are supported on a cross member (7) of a suspension arrangement (5) on the other side, and **in that** the raised edge (2) of the radiant plates (1a, 1b, 1c) is provided with a curvature that is adapted to the outside contour of the tubes (3).

2. The radiant surface structure according to Claim 1, **characterized in that** the at least one radiant plate (1a, 1b, 1c) of elastically deformable sheet metal is concavely and/or convexly curved when viewed from the bottom.

3. The radiant surface structure according to Claim 1 or 2, **characterized in that** the radiant plate regions (8, 9a, 9b) are integrally connected to one another and to the raised edge (2).

4. The radiant surface structure according to one of the preceding claims, **characterized in that** the obtuse angle (α) lies between 110° and 180°, preferably between 135° and 175°, particularly at about 155°.

5. The radiant surface structure according to one of the preceding claims, **characterized in that** the radiant plates (1a, 1b, 1c) can be clamped in position from the underside and/or from the upper side of the tube register.

6. The radiant surface structure according to one of the preceding claims, **characterized in that** the bottom radiating region (4) that remains clear extends over a circumferential range of the tubes (3) between 30° and 160°.

7. The radiant surface structure according to one of the preceding claims, **characterized in that** the raised edge (2) abuts the respective tube (3) over a circumferential range of at least 30°.

## Revendications

1. Structure de surface rayonnante, en particulier structure de surface rayonnante pour plafond, comprenant au moins une plaque rayonnante (1a, 1b, 1c) en tôle qui repose avec un bord plié (2) sur au moins l'un de tubes (3) écartés les uns des autres d'un échangeur tubulaire à alimenter avec un fluide de chauffage ou de refroidissement pour la transmission de chaleur et/ou de froid, sachant que la plaque rayonnante (1a, 1b, 1c) peut être bloquée entre deux tubes (3) par une précontrainte sans autre moyen de fixation, c'est dire en s'auto-fixant, sachant que les tubes (3) présentent une section transversale en croix de façon à ce que les plaques rayonnantes (1a, 1b, 1c) puissent être bloquées sur ceux-ci lorsque l'on maintient libérée une zone de rayonnement (4) en sous-face des tubes respectifs (3), **caractérisé en ce qu'**au moins une plaque rayonnante (1a, 1b) formée comme plaque centrale présente une zone de plaque rayonnante centrale (8) qui s'étend en état monté de manière essentiellement horizontale et deux zones de plaque rayonnante latérales (9a, 9b) reliées à celle-ci par un angle obtus (α) sur des côtés se faisant face, lesquelles à leur tour sont reliées respectivement sur leur côté détourné de la zone de plaque rayonnante centrale (8) avec le bord plié (2) reposant sur un tube (3) respectif et que des plaques rayonnantes (1c) sont formées comme des plaques latérales qui reposent d'une part sur un tube (3) par un bord (2) et d'autre part sont appuyées sur un support transversal (7) d'une suspension (5) et le bord plié (2) des plaques rayonnantes (1a, 1b, 1c) est muni d'un bombement adapté au contour extérieur des tubes (3).

2. Structure de surface rayonnante selon la revendication 1, **caractérisée en ce que** l'au moins une plaque rayonnante (1a, 1b, 1c) en tôle plastiquement déformable est concave et/ou convexe vue du bas.

3. Structure de surface rayonnante selon la revendication 1 ou 2, **caractérisée en ce que** les zones de plaque rayonnante (8, 9a, 9b) sont reliées de manière monobloc l'une à l'autre et au bord plié (2).

4. Structure de surface rayonnante selon l'une des revendications précédentes, **caractérisée en ce que** l'angle obtus (α) fait entre 110° et 180°, de préférence entre 135° et 175°, en particulier environ 155°.

5. Structure de surface rayonnante selon l'une des revendications précédentes, **caractérisée en ce que** les plaques rayonnantes (1a, 1b, 1c) peuvent être bloquées depuis la face inférieure et/ou la face supérieure de l'échangeur tubulaire.

6. Structure de surface rayonnante selon l'une des revendications précédentes, **caractérisée en ce que** la zone de rayonnement (4) en sous-face maintenue libre occupe une zone périphérique des tubes (3) d'entre 30° et 160°.

7. Structure de surface rayonnante selon l'une des revendications précédentes, **caractérisée en ce que** le bord plié (2) repose dans une zone périphérique d'au moins 30° sur le tube (3) respectif.
